# EUROPÄISCHE PATENTANMELDUNG

(11) **EP 1 085 761 A1**
(43) Veröffentlichungstag der Anmeldung: **21.03.2001**
(21) Anmeldenummer: 00120014.6
(22) Anmeldetag: 14.09.2000
(51) Int. Cl.: H04N 7/26

(54) **Bewegungsschätzung in einem objektorientierten Videokodierer**

(30) Priorität: 15.09.1999 DE 19944300
(71) Anmelder: SIEMENS AKTIENGESELLSCHAFT, 80333 München (DE)
(72) Erfinder: Kaup, Andre, Dr., 85635 Höhenkirchen (DE); Mooshofer, Hubert, 81543 München (DE)

(57) **Zusammenfassung**

Es wird ein Verfahren zur Bewegungsschätzung bei der Codierung von einem Bildobjekt in einem Bild angegeben, bei dem das Bild in Bildblöcke unterteilt wird. Dabei wird als ein Kontext nur solch ein erster Bildblock eingesetzt, der hinreichend viele Bildpunkte des Bildobjektes aufweist. Solch ein Kontext wird zur Bestimmung eines Bewegungsvektors eines in einer Umgebung des ersten Bildblocks liegenden zweiten Bildblocks eingesetzt.

## Beschreibung

Die Erfindung betrifft ein Verfahren, eine Anordnung und ein Computerprogrammerzeugnis zur Bewegungsschätzung bei der Codierung von einem Bildobjekt in einem Bild.

Ein Verfahren zur Bildkomprimierung mit dazugehöriger Anordnung ist bekannt aus [1]. Das bekannte Verfahren dient im MPEG-Standard als Codierverfahren und basiert im wesentlichen auf der hybriden DCT (Diskreten Cosinus Transformation) mit Bewegungskompensation. Ein ähnliches Verfahren wird für die Bildtelefonie mit n x 64kbit/s (CCITT-Empfehlung H.261), für die TV-Kontribution (CCR-Empfehlung 723) mit 34 bzw. 45Mbit/s und für Multimedia-Applikationen mit 1,2Mbit/s (ISO-MPEG-1) verwendet. Die hybride DCT besteht aus einer zeitlichen Verarbeitungsstufe, die die Verwandtschaftsbeziehungen aufeinanderfolgender Bilder ausnutzt, und einer örtlichen Verarbeitungsstufe, die die Korrelation innerhalb eines Bildes ausnutzt.

Die örtliche Verarbeitung (Intraframe-Codierung) entspricht im wesentlichen der klassischen DCT-Codierung. Das Bild wird in Blöcke von 8x8 Bildpunkten zerlegt, die jeweils mittels DCT in den Frequenzbereich transformiert werden. Das Ergebnis ist eine Matrix von 8x8 Koeffizienten, die näherungsweise die zweidimensionalen Ortsfrequenzen im transformierten Bildblock widerspiegeln. Ein Koeffizient mit Frequenz 0 (Gleichanteil) stellt einen mittleren Grauwert des Bildblocks dar.

Nach der Transformation findet eine Datenexpansion statt. Allerdings wird in natürlichen Bildvorlagen eine Konzentration der Energie um den Gleichanteil (DC-Wert) stattfinden, während die höchstfrequenten Koeffizienten meist nahezu Null sind.

In einem nächsten Schritt erfolgt eine spektrale Gewichtung der Koeffizienten, so daß die Amplitudengenauigkeit der hochfrequenten Koeffizienten verringert wird. Hierbei nützt man die Eigenschaften des menschlichen Auges aus, das hohe Ortsfrequenzen weniger genau auflöst als niedrige.

Ein zweiter Schritt der Datenreduktion erfolgt in Form einer adaptiven Quantisierung, durch die die Amplitudengenauigkeit der Koeffizienten weiter verringert wird bzw. durch die die kleinen Amplituden zu Null gesetzt werden. Das Maß der Quantisierung hängt dabei vom Füllstand des Ausgangspuffers ab: Bei leerem Puffer erfolgt eine feine Quantisierung, so daß mehr Daten erzeugt werden, während bei vollem Puffer gröber quantisiert wird, wodurch sich die Datenmenge reduziert.

Nach der Quantisierung wird der Block diagonal abgetastet ("zigzag"-Scanning), anschließend erfolgt eine Entropiecodierung, die eine weitere Datenreduktion bewirkt. Hierfür werden zwei Effekte ausgenutzt:
1.) Die Statistik der Amplitudenwerte (hohe Amplitudenwerte treten seltener auf als kleine, so daß den seltenen Ereignissen lange und den häufigen Ereignissen kurze Codewörter zugeordnet werden (Variable-Length-Codierung, VLC). Auf diese Weise ergibt sich im Mittel eine geringere Datenrate als bei einer Codierung mit fester Wortlänge. Die variable Rate der VLC wird anschließend im Pufferspeicher geglättet.
2.) Man nutzt die Tatsache aus, daß von einem bestimmten Wert an in den meisten Fällen nur noch Nullen folgen. Statt aller dieser Nullen überträgt man lediglich einen EOB-Code (End Of Block), was zu einem signifikanten Codiergewinn bei der Kompression der Bilddaten führt. Statt der Ausgangsrate von bspw. 512bit sind dann nur 46bit für diesen Block zu übertragen, was einem Kompressionsfaktor von über 11 entspricht.

Einen weiteren Kompressionsgewinn erhält man durch die zeitliche Verarbeitung (Interframe-Codierung). Zur Codierung von Differenzbildern wird weniger Datenrate benötigt als für die Originalbilder, denn die Amplitudenwerte sind weitaus geringer.

Allerdings sind die zeitlichen Differenzen nur klein, wenn auch die Bewegungen im Bild gering sind. Sind hingegen die Bewegungen im Bild groß, so entstehen große Differenzen, die wiederum schwer zu codieren sind. Aus diesem Grund wird die Bild-zu-Bild-Bewegung gemessen (Bewegungsschätzung) und vor der Differenzbildung kompensiert (Bewegungskompensation). Dabei wird die Bewegungsinformation mit der Bildinformation übertragen, wobei üblicherweise nur ein Bewegungsvektor pro Makroblock (z.B. vier 8x8-Bildblöcke) verwendet wird.

Noch kleinere Amplitudenwerte der Differenzbilder werden erhalten, wenn statt der verwendeten Prädiktion eine bewegungskompensierte bidirektionale Prädiktion benutzt wird.

Bei einem bewegungskompensierten Hybridcoder wird nicht das Bildsignal selbst transformiert, sondern das zeitliche Differenzsignal. Aus diesem Grund verfügt der Coder auch über eine zeitliche Rekursionsschleife, denn der Prädiktor muß den Prädiktionswert aus den Werten der bereits übertragenen (codierten) Bilder berechnen. Eine identische zeitliche Rekursionsschleife befindet sich im Decoder, so daß Coder und Decoder völlig synchronisiert sind.

Im MPEG-2-Codierverfahren gibt es hauptsächlich drei verschiedene Methoden, mit denen Bilder verarbeitet werden können:
- I-Bilder:: Bei den I-Bildern wird keine zeitliche Prädiktion verwendet, d.h., die Bildwerte werden direkt transformiert und codiert. I-Bilder werden verwendet, um den Decodiervorgang ohne Kenntnis der zeitlichen Vergangenheit neu beginnen zu können, bzw. um eine Resynchronisation bei Übertragungsfehlern zu erreichen.
- P-Bilder:: Anhand der P-Bilder wird eine zeitliche Prädiktion vorgenommen, die DCT wird auf den zeitlichen Prädiktionsfehler angewandt.
- B-Bilder:: Bei den B-Bildern wird der zeitliche bidirektionale Prädiktionsfehler berechnet und anschließend transformiert. Die bidirektionale Prädiktion arbeitet grundsätzlich adaptiv, d.h. es wird eine Vorwärtsprädiktion, eine Rückwärtsprädiktion oder eine Interpolation zugelassen.

Ein Bildsequenz wird bei der MPEG-2-Codierung in sog. GOPs (Group Of Pictures) eingeteilt. n Bilder von einem I-Bild zum nächsten bilden eine GOP. Der Abstand zwischen den P-Bildern wird mit m bezeichnet, wobei sich jeweils m-1 B-Bilder zwischen den P-Bildern befinden. Die MPEG-Syntax überläßt es jedoch dem Anwender, wie m und n gewählt werden. m=1 bedeutet, daß keine B-Bilder verwendet werden, und n=1 bedeutet, daß nur I-Bilder codiert werden.

Aus [4] ist ein Verfahren zur Bewegungsschätzung im Rahmen eines Verfahrens zur blockbasierten Bildcodierung bekannt. Dabei wird vorausgesetzt, daß ein digitalisiertes Bild Bildpunkte aufweist, die in Bildblöcken von insbesondere 8x8 Bildpunkten oder 16x16 Bildpunkten zusammengefaßt sind. Gegebenenfalls kann ein Bildblock auch mehrere Bildblöcke umfassen. Ein Beispiel hierfür stellt ein Makroblock mit 6 Bildblöcken dar, von denen 4 Bildblöcke für Helligkeitsinformation und 2 Bildblöcke für Farbinformation vorgesehen sind.

Bei einer Folge von Bildern wird für ein zu codierendes Bild unter Berücksichtigung der Bildblöcke dieses Bildes wie folgt verfahren:
■ Es wird für den Bildblock, für den eine Bewegungsschätzung durchgeführt werden soll, in einem zeitlich vorhergehenden Bild, ausgehend von einem Bildblock, der sich in der gleichen relativen Position in dem vorhergehenden Bild befand (= vorangegangener Bildblock), ein Wert für ein Fehlermaß bestimmt. Dazu wird bevorzugt eine Summe über die Beträge der Differenzen von den Bildpunkten zugeordneter Codierungsinformation des Bildblocks und des vorangegangenen Bildblocks bestimmt.
   Unter Codierungsinformation ist hierbei eine Helligkeitsinformation (Luminanzwert) und/oder eine Farbinformation (Chrominanzwert) zu verstehen, welche jeweils einem Bildpunkt zugeordnet ist.
■ In einem Suchraum vorgebbarer Größe und Form um die Ausgangsposition in dem zeitlich vorhergehenden Bild wird jeweils für ein Gebiet derselben Größe des vorangegangenen Bildblocks, verschoben um einen oder einen halben Bildpunkt, ein Wert des Fehlermaßes bestimmt.
■ In einem Suchraum der Größe nxn-Bildpunkte ergeben sich n² (Fehler-)Werte. Es wird derjenige verschobene vorangegangene Bildblock in dem zeitlich vorhergehenden Bild ermittelt, für den das Fehlermaß einen minimalen Fehlerwert ergibt. Für diesen Bildblock wird angenommen, daß dieser vorangegangene Bildblock mit dem Bildblock des zu codierenden Bildes, für den die Bewegungsschätzung durchgeführt werden soll, am besten übereinstimmt.
■ Das Ergebnis der Bewegungsschätzung ist ein Bewegungsvektor, mit dem die Verschiebung zwischen dem Bildblock in dem zu codierenden Bild und dem ausgewählten Bildblock in dem zeitlich vorhergehenden Bild beschrieben wird.
■ Eine Kompression der Bilddaten wird dadurch erreicht, daß der Bewegungsvektor und das Fehlersignal codiert werden.
■ Insbesondere wird die Bewegungsschätzung für jeden Bildblock eines Bildes durchgeführt.

Ein objektbasiertes Bildkompressionsverfahren basiert auf einer Zerlegung des Bildes in Objekte mit beliebiger Berandung. Die einzelnen Objekte werden in verschiedenen "Video Object Plans" getrennt voneinander codiert, übertragen und in einem Empfänger (Decoder) wieder zusammengesetzt. Wie oben beschrieben, wird bei herkömmlichen Codierverfahren das gesamte Bild in quadratische Bildblöcke unterteilt. Dieses Prinzip wird auch bei objektbasierten Verfahren übernommen, indem das zu codierende Objekt in quadratische Blöcke unterteilt und für jeden Block separat eine Bewegungsschätzung mit einer Bewegungskompensation durchgeführt wird. Problematisch ist dabei die Codierung von Randblöcken, da in der Regel der Rand des Objektes nicht mit den Blockrändern übereinstimmt.

Für die Bewegungsschätzung gibt es unterschiedliche Suchstrategien. Für blockbasierte Bildkompressionsverfahren wird ein sogenanntes "Block-Matching-Verfahren" eingesetzt. Es beruht darauf, daß der zu codierende Bildblock mit gleich großen Bildblöcken eines Referenzbildes verglichen wird. Einer der Referenzbildblöcke befindet sich auf der gleichen Position wie der zu codierende Bildblock, die anderen Referenzbildblöcke sind gegenüber diesem örtlich verschoben. Bei einem großen Suchbereich in horizontaler und vertikaler Richtung ergeben sich zahlreiche Suchpositionen, so daß bei vollständiger Suche eine entsprechend große Anzahl von Blockvergleichen durchgeführt werden muß. Als ein Kriterium für eine Güte der Übereinstimmung zwischen dem zu codierenden Block und dem Referenzblock wird im allgemeinen eine Summe der absoluten Differenzen der einzelnen Bildpunkte verwendet. Solch ein Suchverfahren wird auch gerne mit sogenannten Ratenrandbedingungen gemäß [2] verknüpft, um die Bewegungsvektoren robust gegenüber Fehlschätzungen zu machen. Dadurch verbessert sich die Bildqualität.

Schwierig wird die Bewegungsschätzung dann, wenn bei der objektbasierten Bildcodierung ein Block nur zum Teil durch das (Bild-)Objekt bedeckt ist. Ein Blockvergleich sollte eigentlich auf diejenigen Bildpunkte beschränkt sein, die auch zu dem Objekt gehören. Dies ist dann gegeben, wenn der zugehörige Referenzbildblock im Referenzbild die gleiche Objektberandung hat. Dieser Spezialfall ist normalerweise bei der Bildkompression nur selten gegeben, da eine translatorische Bewegung von starren Objekten parallel zur Bildebene selten ist. Weitaus häufiger werden Rotationsbewegungen, Bewegungen entlang einer z-Achse, das heißt Bewegungen der Kamera, oder sonstige bilineare Abbildungen des Objekts vorgefunden. Ein einfacher Blockvergleich führt also zumeist noch zu keiner vollständigen Übereinstimmung.

Eine Möglichkeit, dennoch einen erfolgreichen Blockvergleich durchzuführen, besteht darin, diejenigen Bildpunkte, die nicht vom Objekt bedeckt sind, in geeigneter Weise, zum Beispiel durch Bildpunktergänzung ("Padding"), zu ergänzen und die Bewegungsschätzung nach dem oben beschriebenen Suchverfahren durchzuführen. Dazu werden alle Blöcke, die sich innerhalb eines bestimmten Gebietes um das Referenzobjekt befinden, geeignet aufgefüllt und anschließend die Bewegung geschätzt [3].

Insbesondere bei den Randblöcken ergibt sich das Problem, daß die Bewegung in der Regel trotz Bildpunktergänzung nur sehr unzuverlässig geschätzt werden kann. Dies hat im wesentlichen zwei Gründe:
a) Zum einen enthalten die Randblöcke nur wenig Bildpunkte. Eine gesicherte Aussage über die Richtigkeit eines ermittelten Bewegungsvektors ist durch den simplen Vergleich der verbleibenden Bildpunkte in dem Randblock in der Regel nicht möglich, da diese Bildpunkte zumeist geringe Luminanz aufweisen und stark durch Bildrauschen gestört sind.
b) Ferner existieren für viele Randblöcke keine Prädiktoren.

Dieser Nachteil verschärft sich dadurch, daß ein schlecht geschätzter Randblock zu Folgefehlern führt, da nachfolgende Blöcke ausgehend von dem falschen Randblock als Prädiktor ebenfalls einen falschen Bewegungsvektor erhalten.

Die **Aufgabe** der Erfindung besteht darin, eine Bewegungsschätzung bei der Codierung von einem Bildobjekt anzugeben, wobei insbesondere die problematisch zu handhabenden Randblöcke des Bildobjekts geeignet verarbeitet werden.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zur Bewegungsschätzung bei der Codierung von einem Bildobjekt in einem Bild angegeben, bei dem das Bild in Bildblöcke unterteilt wird. Dabei wird als ein Kontext nur solch ein erster Bildblock eingesetzt, der hinreichend viele Bildpunkte des Bildobjektes aufweist. Solch ein Kontext wird zur Bestimmung eines Bewegungsvektors eines in einer Umgebung des ersten Bildblocks liegenden zweiten Bildblocks eingesetzt.

Hierbei ist es insbesondere von Vorteil, daß zweckmäßig von einem Bildblock innerhalb des Bildobjektes ausgegangen wird, der hinreichend viele Bildpunkte des Bildobjektes besitzt. Dieser Bildblock ist geeignet, einen Bewegungsvektor anzugeben, anhand dessen eine Bewegungsschätzung für das Objekt vorteilhaft durchgeführt wird. Dieser Bewegungsvektor ist dabei mit geringem Fehler behaftet, so daß er für anliegende Bildblöcke als grobe Richtungsvorgabe dienen kann.

Dieser Sachverhalt ist insoweit anschaulich, als für einen Bildblock mit hinreichend vielen Bildpunkten aus dem Bildobjekt eine sinnvolle Bewegungsschätzung erfolgen kann. Der sich ergebende Bewegungsvektor ist somit geeignet zur Bestimmung von Bewegungsvektoren für Bildblöcke, die nicht ausreichend viele Bildpunkte des Bildobjektes aufweisen (aber immerhin noch einige).

Unter Kontext ist hierbei zu verstehen, daß ein ermittelter Bewegungsvektor für nachfolgend zu ermittelnde Bewegungsvektoren eine Richtungsvorgabe (mit einer vorgegebenen Unschärfe vergleichbar einer Streuung eines entlang einer Richtung eines Fahrzeugs geworfenen Schweinwerferkegels) liefert, bspw. dadurch, daß dieser Wert als ein Startwert für die Suche des Bewegungsvektors gewählt wird und/oder die Datenrate bei der Codierung berücksichtigt wird.

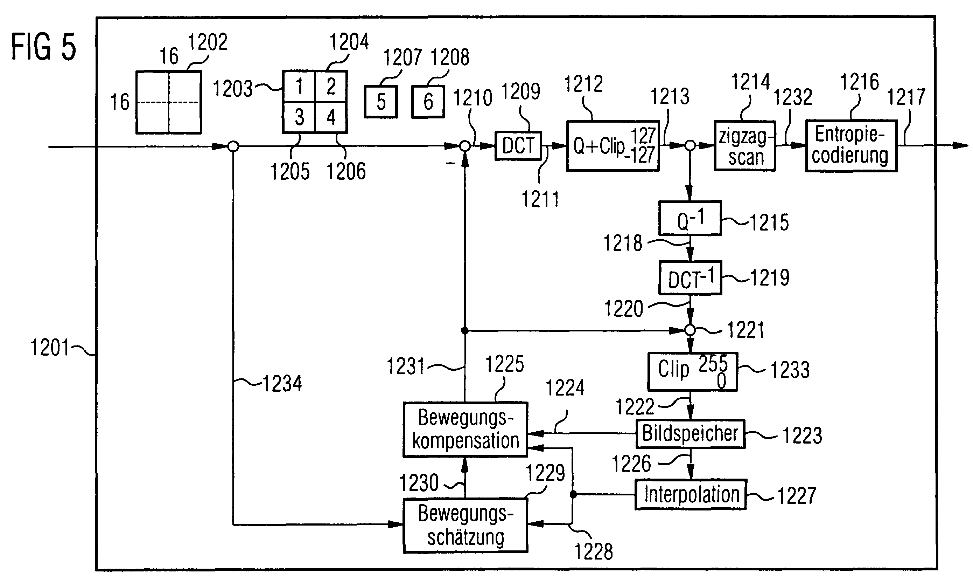

Es sei angemerkt, daß gemäß den detaillierten Ausführungen zu Fig.5 eine Übertragung der komprimierten Bilddaten von einem Encoder zu einem Decoder erfolgt. Dabei werden die Bilddaten als Datenstrom übermittelt, wobei auf Seite des Decoders der Datenstrom ausgepackt und insbesondere dargestellt wird. Die Bildkompression mit Bewegungsschätzung und geeigneten Suchverfahren findet beim Encoder statt.

Eine Weiterbildung besteht darin, daß dann hinreichend viele Bildpunkte des Bildobjektes in dem ersten Bildblock enthalten sind, wenn ein vorgegebener Schwellwert für eine Anzahl von Bildpunkten überschritten wird. Je nach Anwendungsfall und zu erkennendem Objekt ist somit eine individuelle Schwelle für die Anzahl der Bildpunkte des Objekts, die in dem Bildblock enthalten sind, individuell vorgebbar.

Auch ist es eine Weiterbildung, daß dann hinreichend viele Bildpunkte des Bildobjekts in dem ersten Bildblock enthalten sind, wenn der erste Bildblock vollständig in dem Bildobjekt enthalten ist. Dies ist insbesondere bei großen Bildobjekten sinnvoll.

Eine zusätzliche Weiterbildung besteht darin, daß die Umgebung des ersten Bildblocks bestimmt ist durch an den ersten Bildblock direkt angrenzende Bildblöcke. Je nach Anwendungsfall kann die Umgebung auch bestimmt sein durch in einem vorgebbaren Abstand um den ersten Bildblock angeordnete weitere Bildblöcke.

Eine Ausgestaltung besteht darin, daß für den zweiten Bildblock, der teilweise in dem Bildobjekt liegt, der aber nicht hinreichend viele Bildpunkte des Bildobjektes aufweist, der Bewegungsvektor unter Berücksichtigung des Kontextes des ersten Bewegungsvektors ermittelt wird. Hierbei ist es insbesondere von Vorteil, daß ein in dem Encoder nach dem aktuellen Bildblock zu codierender Bildblock einen Bewegungsvektor für den (aktuellen) Bildblock liefert. Dies erfordert insbesondere eine Zwischenspeicherfunktionalität auf der Seite des Encoders.

Auch ist es eine Ausgestaltung, daß mehrere Kontexte zur Bestimmung eines Bewegungsvektors ermittelt werden. Dies ist insbesondere dann von Vorteil, wenn eine Umgebung mit Bildblöcken bekannt ist, deren Bewegungsvektoren bereits ermittelt wurden. Diese Bewegungsvektoren können zur Vorgabe der Richtung des aktuellen Bildblocks herangezogen werden.

Im Rahmen einer zusätzlichen Ausgestaltung wird der Kontext durch eine Richtung des Bewegungsvektors des ersten Bildblockes vorgegeben. Anschaulich bedeutet dies, daß der Bewegungsvektor des ersten Bildblocks eine Richtung (mit einer vorbestimmten Unschärfe) vorgibt, entlang derer der Bewegungsvektor des zweiten Bildblocks zweckmäßig zu verlaufen hat. Durch diesen Bewegungsvektor des ersten Bildblocks ist somit ein Ausschnitt vorgegeben, indem mit hoher Wahrscheinlichkeit auch der Bewegungsvektor des zweiten Bildblocks aufzufinden sein wird. Umfaßt der zweite Bildblock nur sehr wenige Bildpunkte des Objektes, so ist unklar, wo in dem Bildobjekt diese wenigen Punkte überall auftauchen. Wird lediglich (ohne Kontext) der Bewegungsvektor ermittelt, so kann dieser in eine Richtung zeigen, die aufgrund der wenigen Information für den Bildblock (wenige Bildpunkte des Objektes) ungenaue bzw. völlig falsch ist. Durch die Berücksichtigung des Kontextes ergibt sich auch für den Bewegungsvektor des zweiten Blocks, der sehr wenige Bildpunkte des Objektes aufweist, eine Richtung, wo wahrscheinlich ein übereinstimmender Bildblock zu finden ist. Dadurch, daß der Bewegungsvektor für den zweiten Bildblock nicht in eine völlig falsche (andere) Richtung zeigt, ist eine nachfolgende Korrektur dieser Richtung durch einen Bewegungsvektor eines nachfolgenden Blocks (zum Beispiel des ersten Bildblockes) gering, so daß für diese Korrektur nur wenige Bits an den Decoder zu übertragen sind und sich somit anhand des geeigneten Kontextes Bandbreite bei der Datenübertragung einsparen läßt.

Eine andere Ausgestaltung besteht darin, daß eine Berücksichtigung des Kontextes insbesondere in einer vertikalen oder in einer horizontalen Richtung erfolgt. Damit kann das Bild, insbesondere das Bildobjekt, sowohl zeilen- als auch spaltenweise abgearbeitet werden.

Eine andere Weiterbildung besteht darin, daß im Rahmen der Bewegungsschätzung ein nächster Bildblock als Kontext für einen aktuellen Bildblock eingesetzt wird. Nächster Bildblock bezieht sich hierbei auf die Reihenfolge bei der Datenübertragung von dem Encoder zu dem Decoder.

Auch ist es eine Weiterbildung, daß jeder Bildblock in mehrere Teilbildblöcke unterteilt sein kann.

Zur Lösung der Aufgabe wird ferner eine Anordnung angegeben, die eine Prozessoreinheit aufweist, die derart eingerichtet ist, daß
a) das Bild in Bildblöcke unterteilbar ist;
b) als ein Kontext nur solch ein erster Bildblock einsetzbar ist, der hinreichend viele Bildpunkte des Bildobjekts aufweist;
c) der Kontext zur Bestimmung eines Bewegungsvektors eines in einer Umgebung des ersten Bildblocks liegenden zweiten Bildblocks einsetzbar ist.

Auch wird zur Lösung der Aufgabe ein Computerprogrammerzeugnis angegeben, das bei einem Laden in einen Speicher einer Prozessoreinheit eine Ausführung der folgenden Schritte bewirkt:
a) das Bild wird in Bildblöcke unterteilt;
b) als ein Kontext wird nur solch ein erster Bildblock eingesetzt, der hinreichend viele Bildpunkte des Bildobjekts aufweist;
c) der Kontext wird zur Bestimmung eines Bewegungsvektors eines in einer Umgebung des ersten Bildblocks liegenden zweiten Bildblocks eingesetzt.

Diese Anordnung und dieses Computerprogrammerzeugnis sind insbesondere geeignet zur Durchführung des erfindungsgemäßen Verfahrens oder einer seiner vorstehend erläuterten Weiterbildungen.

Ausführungsbeispiele der Erfindung werden nachfolgen anhand der Zeichnungen dargestellt und erläutert.

Es zeigen
- Fig.1: eine Skizze mit einem Bildobjekt und einer Zeile von Bildblöcken;
- Fig.2: eine Skizze mit einem Bildobjekt und mehreren bereits codierten Bildblöcken;
- Fig.3: eine Skizze, die eine Codierung eines Bildobjekts veranschaulicht;
- Fig.4: Schritte eines Verfahrens zur Bewegungsschätzung bei der Codierung von einem Bildobjekt in einem Bild;
- Fig.5: eine Skizze mit einem Bildcoder und einem Bilddecoder;
- Fig.6: eine Prozessoreinheit.

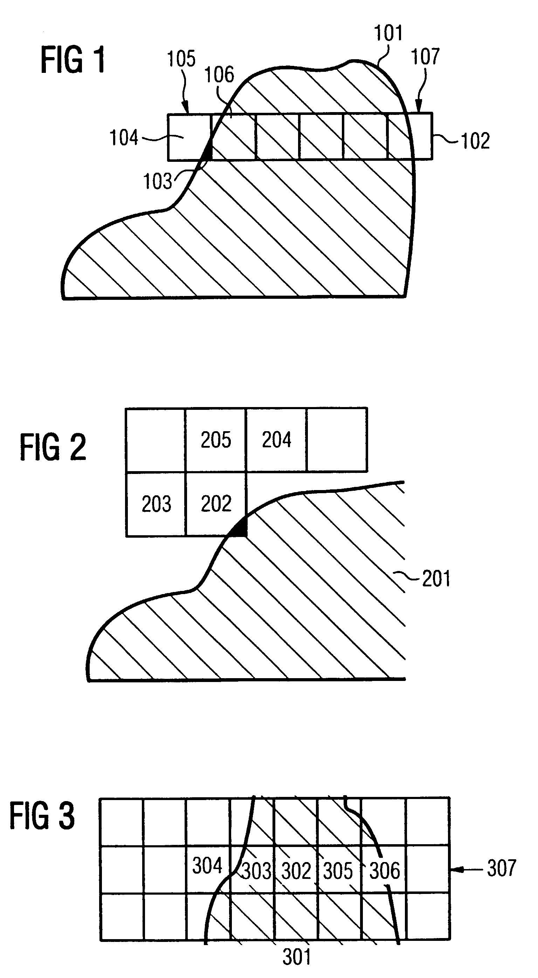

In **Fig.1** ist eine Skizze mit einem Bildobjekt 101 und einer Zeile 102 von Bildblöcken dargestellt. Die Zeile 102 soll beispielhaft einen Ausschnitt eines Bildes darstellen, das mittels Bilddatenkompression codiert und übertragen werden soll. Dieses Bild umfaßt insbesondere das Bildobjekt 101. In Fig.1 ist gut zu erkennen, daß die Umrandung des Bildobjekts 101 nicht auf die Ränder der Bildblöcke fällt und somit sich manche Bildblöcke der Zeile 102 nur teilweise mit dem Bildobjekt 101 überlappen. Eine solche teilweise Überlappung betrifft insbesondere die Bildblöcke 105, 106 und 107 in der Zeile 102.

Anhand des Bildblocks 105 läßt sich zeigen, daß es einen Teil 104 gibt, der nicht in dem Bildobjekt 101 enthalten ist. Ein weitaus kleinerer Teil 103 des Bildblocks 105 ist in dem Bildobjekt 101 enthalten. Bei einer rein sequentiellen Codierung der Bildblöcke, die insbesondere zeilenweise erfolgt, ergibt sich, daß der Bildblock 105 vor dem Bildblock 106 codiert wird. Insbesondere wird hierbei eine Bewegungsvektor für den Bildblock 105 ermittelt. Dieser Bewegungsvektor wird für den Bewegungsvektor des nachfolgenden Blockes 106 herangezogen, bei großer Abweichung beider Bewegungsvektoren voneinander ergibt sich eine größere zu übertragende Datenmenge als bei einer kleinen Abweichung des Bewegungsvektors für den Block 105 von dem Bewegungsvektor des Blocks 106. Interessiert, wie im vorliegenden Fall, insbesondere eine Codierung des Bildobjektes 101, so ist lediglich für den Block 105 der Bereich 103 für die Bestimmung des Bewegungsvektors ausschlaggebend. Demnach wird für das in Fig.1 gezeigte Bild-objekt der Teilbereich 103 in einem zeitlich vorangegangenen Bildobjekt gesucht. Da der Bereich 103 nur wenige Bildpunkte des Bildobjekts umfaßt, gibt es entsprechend viele Möglichkeiten, den Block 105 (gesucht wird nur der Teilbereich 103) in dem zeitlich vorangegangenen Bild (insbesondere dem Bildobjekt) zu finden. Dadurch kann ein Bewegungsvektor ermittelt werden, der insbesondere für die Richtung des nachfolgenden Bildblockes schlecht ist, da er in eine vollständig andere Richtung zeigt. Es ergibt sich somit ein großer Unterschied zu dem nachfolgenden Bewegungsvektor. Dieser Unterschied führt zu einer starken Korrektur, die sich in entsprechend vielen zu übertragenden Bits niederschlägt.

Das Problem wird dadurch gelöst, daß vor dem Block 105, der signifikant wenig Bildpunkte mit dem Bildobjekt 101 gemeinsam hat, der Block 106 verarbeitet wird. Dieser Bildblock 106 umfaßt deutlich mehr Bildpunkte, die in einem Überlappungsbereich mit dem Bildobjekt 101 liegen. Daher ist es vorteilhaft, zuerst für den Bildblock 106 einen Bewegungsvektor zu ermitteln (Prädiktion durchzuführen) und anhand des ermittelten Bewegungsvektors daraufhin den Bewegungsvektor für den Block 105 zu bestimmen. Somit dient der Bewegungsvektor des Blocks 106 als Kontext für den Bewegungsvektor des Blocks 105. Der Vorteil besteht vor allem darin, daß anhand der Bewegungsschätzung für den Block 106 viel Information, nämlich die Bildpunkte innerhalb des Bildblocks 106, genutzt werden kann und somit der Bewegungsvektor mit hoher Wahrscheinlichkeit eine Richtung aufweist, die auch für den benachbarten vorangegangenen Block 105 kennzeichnend ist.

**Fig.2** zeigt eine Skizze mit einem Bildobjekt und mehreren bereits codierten Bildblöcken. Im vorliegenden Fall wird davon ausgegangen, daß die Bildcodierung zeilenweise, insbesondere von links nach rechts, erfolgt. Für einen aktuell zu codierenden Bildblock 202 sind in der unmittelbaren Umgebung (gemeinsame Kante mit weiteren Bildblöcken) bereits die Bildblöcke 203 und 205 codiert. Allerdings weist lediglich der Block 202 (eine kleine) Überlappung mit einem Bildobjekt 201 auf. Zur Codierung des Bildobjekts 201 spielt lediglich das Objekt selbst eine Rolle. Der Bereich um das Bildobjekt soll nicht codiert werden. Demnach kann die vorangegangene Umgebung (Bildblöcke 203 und 205) für den Bildblock 202 nicht als Kontext verwendet werden. Der Bildblock 202 weist als erster in der zeitlichen Reihenfolge der codierten Bildblöcke eine Überlappung mit dem Bildobjekt 201 auf. Im Hinblick auf einen Kontext ist für den Bildblock 202 also keine Information verfügbar.

Analog zu Fig.1 wird demnach für zumindest einen Block, der zu einem signifikanten Anteil innerhalb des Bildobjekts 201 liegt, eine Bewegungsschätzung mit Bestimmung des Bewegungsvektors durchgeführt. Dieser Bewegungsvektor kann als Kontext für linksseitige (also zeitlich vorangegangene) Bildblöcke, die eine teilweise Überlappung mit dem Bildobjekt 201 aufweisen, eingesetzt werden.

**Fig.3** zeigt eine mögliche Codierungsreihenfolge für ein Bildobjekt 301. Betrachtet wird hierbei eine Zeile 307. Die Zeile 307 umfaßt fünf Bildblöcke, die zumindest teilweise mit dem Bildobjekt 301 einen Überlappungsbereich aufweisen. Die Codierung soll wiederum zeilenweise, von links nach rechts, erfolgen. In der Zeile 307 weisen die Bildblöcke 303 und 304 nur teilweise eine Überlappung mit dem Bildobjekt 301 auf. Der Bildblock 302 ist der erste Bildblock, der vollständig (innerhalb der Zeile 307) in dem Bildobjekt 301 enthalten ist. Für diesen Bildblock 302 wird eine Bewegungsschätzung durchgeführt. Dabei wird ein Bewegungsvektor ermittelt, der für den Block 303 als Kontext dient. Für den Block 303 wird also eine Bewegungsschätzung durchgeführt, wobei eine Bewegungsvektor ermittelt wird, der von dem Bewegungsvektor des Bildblocks 302 ausgeht. Insbesondere wird anschließend für den Bildblock 304, der einen kleinen Überlappungsbereich mit dem Bildobjekt 301 aufweist, eine Bewegungsschätzung durchgeführt. Dabei werden insbesondere die Bewegungsvektoren der Blöcke 302 und 303 benutzt. Anschließend wird, ausgehend von dem Bildblock 302, jeweils eine Bewegungsschätzung für die Bildblöcke 305 und 306 durchgeführt.

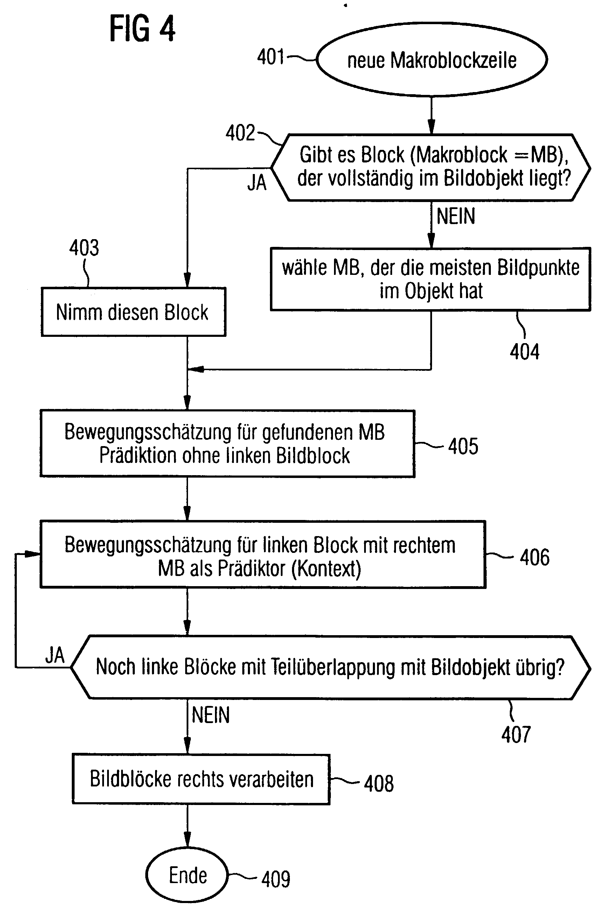

**Fig.4** zeigt Schritte eines Verfahrens zur Bewegungsschätzung bei der Codierung von einem Bildobjekt in einem Bild. Insbesondere sei hierbei darauf hingewiesen, daß ein Bildblock mehrere Teilblöcke umfassen kann. In diesem Fall kann von dem Bildblock als Makroblock oder Makrobildblock gesprochen werden. Das Verfahren von Fig.4 bezieht sich jeweils auf eine Makroblockzeile (vgl. Block 401). Innerhalb der Makroblockzeile wird untersucht, ob es einen Bildblock (Makroblock) gibt, der vollständig in dem Bildobjekt liegt (vgl. Schritt 402). Ist dies der Fall, so wird dieser Block ausgewählt (Schritt 403). Gibt es keinen Bildblock, der vollständig in dieser Zeile und in dem Bildobjekt liegt, so wird derjenige Makroblock ausgewählt, der die meisten Bildpunkte in einem Überlappungsbereich mit dem Bildobjekt aufweist (Schritt 404). Anschließend wird in einem Schritt 405 eine Bewegungsschätzung für den gefundenen Makroblock durchgeführt. Eine Prädiktion erfolgt ohne einen linken Bildblock (kein Kontext). In einem Schritt 406 wird eine Bewegungsschätzung für den linken Bildblock des Makroblocks durchgeführt, wobei der Makroblock selbst als Prädiktor (Kontext) eingesetzt wird. Solange noch linke Blöcke mit einer Teilüberlappung mit dem Bildobjekt übrig sind, wird in einem Schritt 407 zu dem Schritt 406 verzweigt und damit schrittweise von rechts nach links mit jeweils rechtzeitigem Prädiktor die Zeile abgearbeitet. Sind alle Blöcke links von dem ausgehenden Makroblock abgearbeitet, so werden die Bildblöcke rechts verarbeitet. Hierbei wird wie üblich der jeweils linksseitige Kontext (Prädiktor) zur Bewegungsschätzung verwendet. Sind innerhalb der Makroblockzeile keine Bildblöcke mehr vorhanden, die einen Überlappungsbereich mit dem Bildobjekt aufweisen, so ist die Bearbeitung der Makroblockzeile beendet (409).

**Fig.5** zeigt eine Skizze einer Anordnung zur Durchführung eines blockbasierten Bildcodierverfahrens.

Ein zu codierender Videodatenstrom mit zeitlich aufeinanderfolgenden digitalisierten Bildern wird einer Bildcodierungseinheit 1201 zugeführt. Die digitalisierten Bilder sind unterteilt in Makroblöcke 1202, wobei jeder Makroblock 16x16 Bildpunkte hat. Der Makroblock 1202 umfaßt vier Bildblöcke 1203, 1204, 1205 und 1206, wobei jeder Bildblock 8x8 Bildpunkte, denen Luminanzwerte (Helligkeitswerte) zugeordnet sind, enthält. Weiterhin umfaßt jeder Makroblock 1202 zwei Chrominanzblöcke 1207 und 1208 mit den Bildpunkten zugeordneten Chrominanzwerten (Farbinformation, Farbsättigung).

Der Block eines Bildes enthält einen Luminanzwert (=Helligkeit), einen ersten Chrominanzwert (=Farbton) und einen zweiten Chrominanzwert (=Farbsättigung). Dabei werden Luminanzwert, erster Chrominanzwert und zweiter Chrominanzwert als Farbwerte bezeichnet.

Die Bildblöcke werden einer Transformationscodierungseinheit 1209 zugeführt. Bei einer Differenzbildcodierung werden zu codierende Werte von Bildblöcken zeitlich vorangegangener Bilder von den aktuell zu codierenden Bildblöcken abgezogen, es wird nur die Differenzbildungsinformation 1210 der Transformationscodierungseinheit (Diskrete Cosinus Transformation, DCT) 1209 zugeführt. Dazu wird über eine Verbindung 1234 der aktuelle Makroblock 1202 einer Bewegungsschätzungseinheit 1229 mitgeteilt. In der Transformationscodierungseinheit 1209 werden für die zu codierenden Bildblöcke bzw. Differenzbildblöcke Spektralkoeffizienten 1211 gebildet und einer Quantisierungseinheit 1212 zugeführt. Quantisierte Spektralkoeffizienten 1213 werden sowohl einer Scaneinheit 1214 als auch einer inversen Quantisierungseinheit 1215 in einem Rückwärtspfad zugeführt. Nach einem Scanverfahren, z.B. einem "zigzag"-Scanverfahren, wird auf den gescannten Spektralkoeffizienten 1232 eine Entropiecodierung in einer dafür vorgesehenen Entropiecodierungseinheit 1216 durchgeführt. Die entropiecodierten Spektralkoeffizienten werden als codierte Bilddaten 1217 über einen Kanal, vorzugsweise eine Leitung oder eine Funkstrecke, zu einem Decoder übertragen.

In der inversen Quantisierungseinheit 1215 erfolgt eine inverse Quantisierung der quantisierten Spektralkoeffizienten 1213. So gewonnene Spektralkoeffizienten 1218 werden einer inversen Transformationscodierungseinheit 1219 (Inverse Diskrete Cosinus Transformation, IDCT) zugeführt. Rekonstruierte Codierungswerte (auch Differenzcodierungswerte) 1220 werden im Differenzbildmodus einen Addierer 1221 zugeführt. Der Addierer 1221 erhält ferner Codierungswerte eines Bildblocks, die sich aus einem zeitlich vorangegangenen Bild nach einer bereits durchgeführten Bewegungskompensation ergeben. Mit dem Addierer 1221 werden rekonstruierte Bildblöcke 1222 gebildet und in einem Bildspeicher 1223 abgespeichert.

Chrominanzwerte 1224 der rekonstruierten Bildblöcke 1222 werden aus dem Bildspeicher 1223 einer Bewegungskompensationseinheit 1225 zugeführt. Für Helligkeitswerte 1226 erfolgt eine Interpolation in einer dafür vorgesehenen Interpolationseinheit 1227. Anhand der Interpolation wird die Anzahl in dem jeweiligen Bildblock enthaltener Helligkeitswerte vorzugsweise verdoppelt. Alle Helligkeitswerte 1228 werden sowohl der Bewegungskompensationseinheit 1225 als auch der Bewegungsschätzungseinheit 1229 zugeführt. Die Bewegungsschätzungseinheit 1229 erhält außerdem die Bildblöcke des jeweils zu codierenden Makroblocks (16x16 Bildpunkte) über die Verbindung 1234. In der Bewegungsschätzungseinheit 1229 erfolgt die Bewegungsschätzung unter Berücksichtigung der interpolierten Helligkeitswerte ("Bewegungsschätzung auf Halbpixelbasis"). Vorzugsweise werden bei der Bewegungsschätzung absolute Differenzen der einzelnen Helligkeitswerte in dem aktuell zu codierenden Makroblock 1202 und dem rekonstruierten Makroblock aus dem zeitlich vorangegangenen Bild ermittelt.

Das Ergebnis der Bewegungsschätzung ist ein Bewegungsvektor 1230, durch den eine örtliche Verschiebung des ausgewählten Makroblocks aus dem zeitlich vorangegangenen Bild zu dem zu codierenden Makroblock 1202 zum Ausdruck kommt.

Sowohl Helligkeitsinformation als auch Chrominanzinformation bezogen auf den durch die Bewegungsschätzungseinheit 1229 ermittelten Makroblock werden um den Bewegungsvektor 1230 verschoben und von den Codierungswerten des Makroblocks 1202 subtrahiert (siehe Datenpfad 1231).

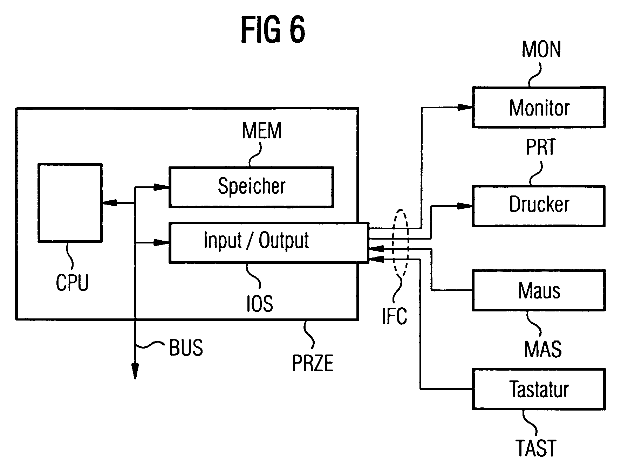

In **Fig.6** ist eine Prozessoreinheit PRZE dargestellt. Die Prozessoreinheit PRZE umfaßt einen Prozessor CPU, einen Speicher MEM und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

### Literaturverzeichnis:

[1] J. De Lameillieure, R. Schäfer: "MPEG-2-Bildcodierung für das digitale Fernsehen", Fernseh- und Kino-Technik, 48.Jahrgang, Nr.3/1994, Seiten 99-107.
[2] G. J. Sullivan, T. Wiegand: "Rate-Distortion Optimization for Video Compression", IEEE Signal Processing Magazine, Bd.15, Nr.6, S.74-90, Nov.1998.
[3] DE 196 48 963 C1
[4] M. Bierling: "Displacement Estimation by Hierarchical Blockmatching", SPIE, Vol.1001, Visual Communications and Image Processing '88, S.942-951, 1988.

## Patentansprüche

1. Verfahren zur Bewegungsschätzung bei der Codierung von einem Bildobjekt in einem Bild,
a) bei dem das Bild in Bildblöcke unterteilt wird;
b) bei dem als ein Kontext nur solch ein erster Bildblock eingesetzt wird, der hinreichend viele Bildpunkte des Bildobjekts aufweist;
c) bei dem der Kontext zur Bestimmung eines Bewegungsvektors eines in einer Umgebung des ersten Bildblocks liegenden zweiten Bildblocks eingesetzt wird.

2. Verfahren nach Anspruch 1,
bei dem hinreichend viele Bildpunkte des Bildobjekts dann in dem ersten Bildblock enthalten sind, wenn ein vorgegebener Schwellwert für eine Anzahl von Bildpunkten überschritten wird.

3. Verfahren nach Anspruch 1,
bei dem hinreichend viele Bildpunkte des Bildobjekts dann in dem ersten Bildblock enthalten sind, wenn der erste Bildblock vollständig in dem Bildobjekt enthalten ist.

4. Verfahren nach einem der vorhergehenden Ansprüche,
bei dem die Umgebung des ersten Bildblocks bestimmt ist durch an den ersten Bildblock direkt angrenzenden Bildblöcke.

5. Verfahren nach einem der vorhergehenden Ansprüche,
bei dem für den zweiten Bildblock, der teilweise in dem Bildobjekt liegt, der aber nicht hinreichend viele Bildpunkte des Bildobjekts enthält, der Bewegungsvektor unter Berücksichtigung des Kontexts ermittelt wird.

6. Verfahren nach einem der vorhergehenden Ansprüche,
bei dem mehrere Kontexte zur Bestimmung eines Bewegungsvektors ermittelt werden.

7. Verfahren nach einem der vorhergehenden Ansprüche,
bei dem der Kontext durch eine Richtung des Bewegungsvektors des ersten Bildblocks vorgegeben wird.

8. Verfahren nach einem der vorhergehenden Ansprüche,
bei dem eine Berücksichtigung des Kontextes insbesondere in vertikaler oder in horizontaler Richtung erfolgt.

9. Verfahren nach einem der vorhergehenden Ansprüche,
bei dem ein im Rahmen der Bewegungsschätzung nächster Bildblock als Kontext für einen aktuellen Bildblock eingesetzt wird.

10. Verfahren nach einem der vorhergehenden Ansprüche,
bei dem der Bildblock in mehrere Teilbildblöcke unterteilt ist.

11. Anordnung zur Bewegungsschätzung bei der Codierung von einem Bildobjekt in einem Bild, bei der eine Prozessoreinheit vorgesehen ist, die derart eingerichtet ist, daß
a) das Bild in Bildblöcke unterteilbar ist;
b) als ein Kontext nur solch ein erster Bildblock einsetzbar ist, der hinreichend viele Bildpunkte des Bildobjekts aufweist;
c) der Kontext zur Bestimmung eines Bewegungsvektors eines in einer Umgebung des ersten Bildblocks liegenden zweiten Bildblocks einsetzbar ist.

12. Computerprogrammerzeugnis zur Bewegungsschätzung bei der Codierung von einem Bildobjekt in einem Bild, das bei Laden in einen Programmspeicher einer Prozessoreinheit eine Ausführung der folgenden Schritte ermöglicht:
a) das Bild wird in Bildblöcke unterteilt;
b) als ein Kontext wird nur solch ein erster Bildblock eingesetzt, der hinreichend viele Bildpunkte des Bildobjekts aufweist;
c) der Kontext wird zur Bestimmung eines Bewegungsvektors eines in einer Umgebung des ersten Bildblocks liegenden zweiten Bildblocks eingesetzt.
